# EUROPEAN PATENT APPLICATION

(11) **EP 4 119 363 A1**
(43) Date of publication of application: **18.01.2023**
(21) Application number: 20962450.1
(22) Date of filing: 19.11.2020
(51) Int. Cl.: B60C 23/04

(54) **RECEIVER, TRANSMITTER, AND TRANSMISSION/RECEPTION SYSTEM**

(71) Applicant: Pacific Industrial Co., Ltd., Ogaki-shi, Gifu 503-8603 (JP)
(72) Inventor: FUJII, Keiyu, Ogaki-shi, Gifu 503-8603 (JP)
(74) Representative: Appleyard Lees IP LLP
(86) International application number: PCT/JP2020/043243
(87) International publication number: WO 2022/107287

(57) **Abstract**

A receiver receives frames transmitted by transmitters respectively attached to wheel assemblies. Each transmitter transmits three or more frames successively at different transmission intervals when a rotation angle of the associated wheel assembly agrees with a specific angle. When receiving the frames, the receiver determines the transmission ordinal numbers of the received ones of the frames from a previously stored correspondence relationship between an order of transmission and transmission intervals of the frames. The receiver derives, from the determined order of transmission of the frames, a specific point in time that is within specified time from the detection of the specific angle. Based on the rotation angle of the wheel obtained by a rotation angle detecting unit at the specific point in time, the receiver identifies the wheel assembly to which each of the transmitters is attached.

## Description

### TECHNICAL FIELD

The present disclosure relates to a receiver, a transmitter, and a transmission-reception system.

### BACKGROUND ART

A transmission-reception system includes transmitters and a receiver. The transmitters are installed in the respective wheel assemblies of a vehicle. The transmitters each detect the condition of the corresponding tire. The transmitters each transmit a frame containing data that represents the condition of the corresponding tire. The receiver receives the frames to acquire the conditions of the tires.

In some cases, a transmission-reception system performs position identification of transmitters as disclosed in Patent Literature 1. Position identification of transmitters refers to a process in which a receiver receives a frame and identifies a wheel assembly to which the transmitter that has transmitted the frame is attached. When a transmission-reception system performs position identification of a transmitter, that transmitter transmits a frame when detecting that the rotation angle of the corresponding wheel assembly agrees with a predetermined specific angle. At this time, the transmitter transmits frames multiple times. Among the frames transmitted several times, the frame that is transmitted first contains data that allows this frame to be identified as the frame that has been transmitted first. When receiving the frame that has been transmitted first, the receiver obtains an angle detection value of the wheel assembly from a rotation angle detecting device. The rotation angle detecting device is configured to detect rotation angles of wheel assemblies as angle detection values. Each time receiving a frame that has been transmitted first, the receiver obtains an angle detection value of each wheel assembly. Based on variations of angle detection values obtained from the respective wheel assemblies, the receiver can identify the wheel assembly to which each of the transmitters is attached. Even if the receiver cannot receive the frame transmitted first, the receiver can acquire the condition of each tire by receiving the frame transmitted second or a frame transmitted thereafter.

### CITATION LIST

### Patent Literature

Patent Literature 1: Japanese National Phase Laid-Open Patent Publication No. 2011-527971

### SUMMARY OF INVENTION

### Technical Problem

Although the receiver can acquire the condition of each tire by receiving frames transmitted after the frame transmitted first, the receiver does not obtain the angle detection values if the receiver fails to receive the frame transmitted first. If the receiver fails to receive the frame transmitted first, it may take long to identify the position of the transmitter.

### Solution to Problem

In accordance with a first aspect of the present disclosure, a receiver includes a receiving unit, a memory, a determining unit, a specific point-in-time deriving unit, and an identifying unit. The receiving unit is configured to receive frames transmitted by transmitters respectively attached to wheel assemblies. Each transmitter transmits three or more frames successively at different transmission intervals when the transmitter detects that a rotation angle of the associated wheel assembly agrees with a specific angle. The memory is configured to store a correspondence relationship between an order of transmission of the frames and the transmission intervals. The determining unit is configured to determine transmission ordinal numbers of the frames from the correspondence relationship when the receiving unit receives the frames. The specific point-in-time deriving unit is configured to derive, from the order of transmission of the frames determined by the determining unit, a specific point in time that is within a specified time from the detection of the specific angle. The identifying unit is configured to identify one of the wheel assemblies to which each of the transmitters is attached based on an angle detection value that is obtained at the specific point in time from a rotation angle detecting unit, the rotation angle detecting unit detecting a rotation angle of the wheel assembly as the angle detection value.

Based on the angle detection values obtained at the specific point in time, the identifying unit identifies the wheel assembly to which each of the transmitters is attached. The specific point in time is derived from the order of transmission of the frames. The order of transmission of the frames is derived from the correspondence relationship between the order of transmission and the transmission intervals of the frames. The order of transmission of the frames can be determined if two or more of the three or more frames that are transmitted successively are received. Even if at least one of the three or more frames that are transmitted successively fails to be received, the angle detection value at the specific point in time can be obtained. This prevents the time required to determine the positions of the transmitters from being extended.

The specific point-in-time deriving unit may be configured to derive, as the specific point in time, a reception point in time or an estimated reception point in time of the frame that has been transmitted first.

The frame that is transmitted first is transmitted when the rotation angle of the wheel assembly is detected to be the specific angle. Thus, setting the specific point in time to the reception point in time or the estimated reception point in time of the frame that is transmitted first reduces variation of the angle detection values as compared to a case in which the specific point in time is set to a point in time different from the reception point in time or the estimated reception point in time of the frame that is transmitted first. This restricts the time required to identify the positions of the transmitters from being extended.

In the above-described receiver, the specific point-in-time deriving unit is configured to, when the frame that has been transmitted first is not received, derive the estimated reception point in time of the frame that has been transmitted first by subtracting, from a reception point in time of the frame that has been transmitted at an nth transmission (n being an integer greater than 1), the transmission interval between the frame that has been transmitted first and the frame that has been transmitted at the nth transmission.

Even if the frame that has been transmitted first is not received, the point in time at which the frame that has been transmitted first would have been received, that is, the estimated reception point in time, can be derived based on the reception point in time of the frame that has been transmitted at the nth transmission and the transmission interval of the frames.

In accordance with a second aspect of the present disclosure, a transmitter attached to each of wheel assemblies is provided. The transmitter includes a detecting unit and a transmitting unit. The detecting unit is configured to detect that a rotation angle of the wheel assembly agrees with a specific angle. The transmitting unit is configured to transmit three or more frames successively at different transmission intervals when the detecting unit detects that the rotation angle of the wheel assembly agrees with the specific angle. The transmitting unit is configured to transmit the frames at the transmission intervals stored in a memory of a receiver, so as to allow the receiver to identify one of the wheel assemblies to which the transmitter is attached. The frames are all the same data.

The receiver identifies the positions of the transmitters using the correspondence relationship between the order of transmission and the transmission intervals of the frames. The order of transmission of the frames can be determined if two or more of the three or more frames that are transmitted successively are received. Each transmitter transmits the frames at the transmission intervals stored in the memory of the receiver, so as to allow the receiver to identify one of the wheel assemblies to which the transmitter is attached. This restricts the time required to identify the positions of the transmitters from being extended.

In accordance with a third aspect of the present disclosure, a transmission-reception system includes a transmitter and a receiver. The transmitter is attached to each of wheel assemblies. The transmitter includes a detecting unit and a transmitting unit. The detecting unit is configured to detect that a rotation angle of the wheel assembly agrees with a specific angle. The transmitting unit is configured to transmit three or more frames successively at different transmission intervals when the detecting unit detects that the rotation angle of the wheel assembly agrees with the specific angle. The frames are all the same data. The receiver includes a receiver unit, a memory, a determining unit, a specific point-in-time deriving unit, and an identifying unit. The receiving unit is configured to receive the frames. The memory is configured to store a correspondence relationship between an order of transmission of the frames and the transmission intervals. The determining unit is configured to determine transmission ordinal numbers of the frames from the correspondence relationship when the receiving unit receives the frames. The specific point-in-time deriving unit is configured to derive, from the order of transmission of the frames determined by the determining unit, a specific point in time that is within a specified time from the detection of the specific angle. The identifying unit is configured to identify one of the wheel assemblies to which each of the transmitters is attached based on an angle detection value that is obtained at the specific point in time from a rotation angle detecting unit. The rotation angle detecting unit detects a rotation angle of the wheel assembly as the angle detection value.

Even if at least one of the three or more frames that are transmitted successively fails to be received, the angle detection value at the specific point in time can be obtained. This prevents the time required to determine the positions of the transmitters from being extended.

### BRIEF DESCRIPTION OF DRAWINGS

Fig. 1 is a schematic diagram of a transmission-reception system mounted on a vehicle.
Fig. 2 is a schematic diagram of a rotation sensor unit installed in the vehicle shown in Fig. 1.
Fig. 3 is a schematic diagram of a transmitter provided in the vehicle shown in Fig. 1.
Fig. 4 is a diagram showing a positional relationship between a wheel assembly and a detection axis of an acceleration sensor provided in the transmitter shown in Fig. 3.
Fig. 5 is a flowchart of a specific angle transmission executed by a transmission controlling unit shown in Fig. 3.
Fig. 6 is a timing diagram showing a correspondence relationship between an order of transmission of frames and transmission intervals of the frames that are transmitted in the specific angle transmission shown in Fig. 5.
Fig. 7 is a flowchart of a wheel assembly position identifying process executed by a reception controlling unit shown in Fig. 1.
Fig. 8 is a diagram showing a correspondence relationship between an order of transmission of frames and transmission intervals of frames.
Fig. 9 is a diagram schematically showing pulse count values obtained in the wheel assembly position identifying process shown in Fig. 7.

### DESCRIPTION OF EMBODIMENTS

A receiver, transmitters, and a transmission-reception system according to one embodiment will now be described.

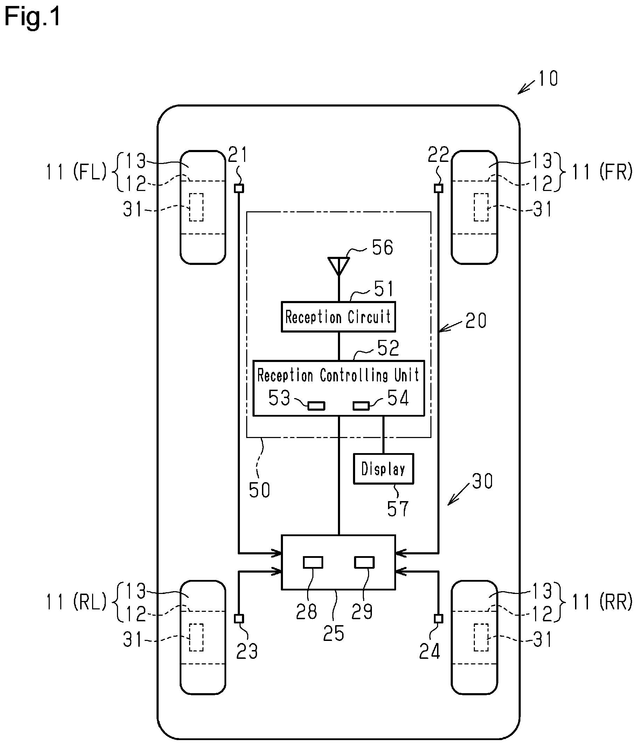

As shown in Fig. 1, a vehicle 10 includes four wheel assemblies 11. Each wheel assembly 11 includes a wheel body 12 and a tire 13, which is attached to the wheel body 12. The wheel assembly 11 on the right front side will be denoted by FR, the wheel assembly 11 on the left front side will be denoted by FL, the wheel assembly 11 on the right rear side will be denoted by RR, and the wheel assembly 11 on the left rear side will be denoted by RL.

The vehicle 10 includes an antilock braking system (ABS) 20. The ABS 20 includes an ABS controller 25 and rotation sensor units 21 to 24, which respectively correspond to the four wheel assemblies 11. The rotation sensor units 21 to 24 include a first rotation sensor unit 21, a second rotation sensor unit 22, a third rotation sensor unit 23, and a fourth rotation sensor unit 24.

The first rotation sensor unit 21 corresponds to the left front wheel assembly FL. The second rotation sensor unit 22 corresponds to the right front wheel assembly FR. The third rotation sensor unit 23 corresponds to the left rear wheel assembly RL. The fourth rotation sensor unit 24 corresponds to the right rear wheel assembly RR.

The ABS controller 25 includes a processor 28 and a memory 29. The ABS controller 25 has a timing function. The timing function is implemented by, for example, a timer or a counter. The processor 28 may be, for example a central processing unit (CPU), a graphics processing unit (GPU), or a digital signal processor (DSP). The memory 29 includes a random-access memory (RAM) and a read-only memory (ROM). The memory 29 stores program codes or commands configured to cause the processor 28 to execute processes. The ABS controller 25 may include a hardware circuit such as an application specific integrated circuit (ASIC) and a field programmable gate array (FPGA). The ABS controller 25, which is processing circuitry, may include one or more processors 28 that operate according to a computer program, one or more hardware circuits such as an ASIC and an FPGA, or a combination thereof. The ROM and the RAM, which are computer-readable media, include any type of media that are accessible by general-purpose computers and dedicated computers.

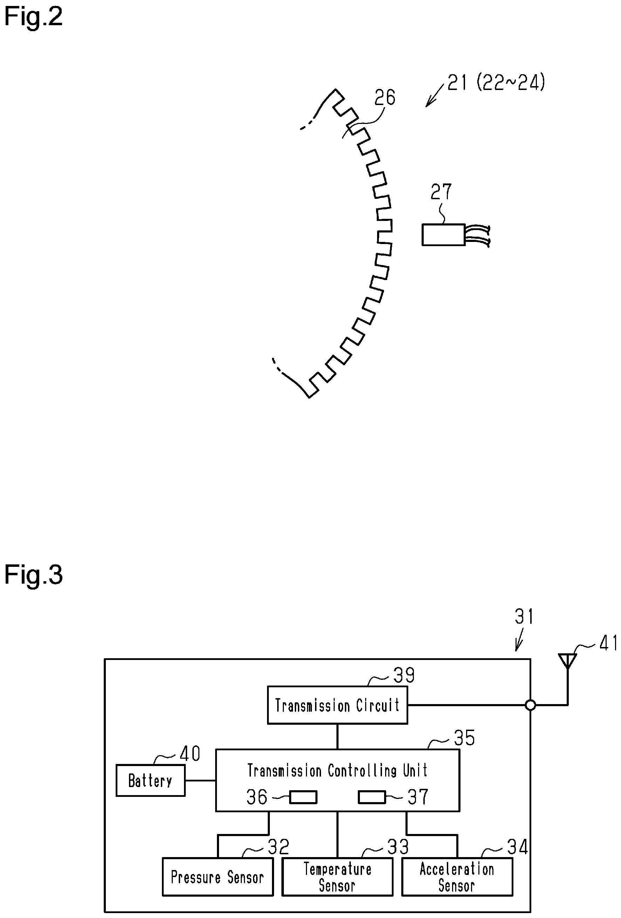

As shown in Fig. 2, each of the rotation sensor units 21 to 24, which serve as rotation angle detecting units, includes a gear 26, which rotates integrally with the wheel assembly 11, and a detector 27 arranged to face the outer circumferential surface of the gear 26. The gear 26 has teeth arranged on the outer circumferential surface at constant angular intervals. The gear 26 has, for example, forty-eight teeth. The detector 27 detects pulses generated by rotation of the gear 26. The ABS controller 25 is connected to the detector 27.

The ABS controller 25 obtains the rotation angles of the wheel assemblies 11 based on pulse count values, which are angle detection values of the detectors 27. Specifically, the ABS controller 25 counts rising edges and falling edges of pulses generated in each detector 27 so as to obtain a pulse count number. The ABS controller 25 divides the obtained pulse count number by the pulse count number per rotation of the gear 26, and obtains the remainder of the division as a pulse count value. The degree of rotation of the gear 26 per pulse count value is obtained by dividing 360 degrees by the pulse count number generated while the wheel assembly 11 rotates one turn. In this manner, the rotation angle of the wheel assembly 11 is obtained from the pulse count value. The pulse count value is a value within the range from 0 to 95. The ABS controller 25 stores pulse count values in the memory 29 in association with points in time.

Next, a transmission-reception system 30 will be described. The transmission-reception system 30 is mounted on the vehicle 10.

As shown in Fig. 1, the transmission-reception system 30 includes transmitters 31 and a receiver 50 mounted on the vehicle body of the vehicle 10. The transmitters 31 are respectively attached to the four wheel assemblies 11 of the vehicle 10. Each transmitter 31 is attached to the corresponding wheel assembly 11 so as to be arranged in the internal space of the tire 13. Any type of transmitter may be used as the transmitters 31. For example, a type that is fixed to a tire valve, a type that is fixed to the wheel body 12, or a type that is fixed to the tire 13 may be used. Each transmitter 31 detects the condition of the associated tire 13. The transmitter 31 wirelessly transmits a frame containing the detected information of the tire 13 to the receiver 50. The transmission-reception system 30 monitors the conditions of the tires 13 by receiving, with the receiver 50, the frames transmitted from the transmitters 31.

As shown in Fig. 3, each transmitter 31 includes a pressure sensor 32, a temperature sensor 33, an acceleration sensor 34, a transmission controlling unit 35, a transmission circuit 39, a battery 40, and a transmission antenna 41. The transmitter 31 is driven by power supplied from the battery 40. The battery 40 may be a primary battery or a power storage device such as a rechargeable battery and a capacitor.

The pressure sensor 32 detects the air pressure of the corresponding tire 13. The temperature sensor 33 detects the temperature inside the corresponding tire 13.

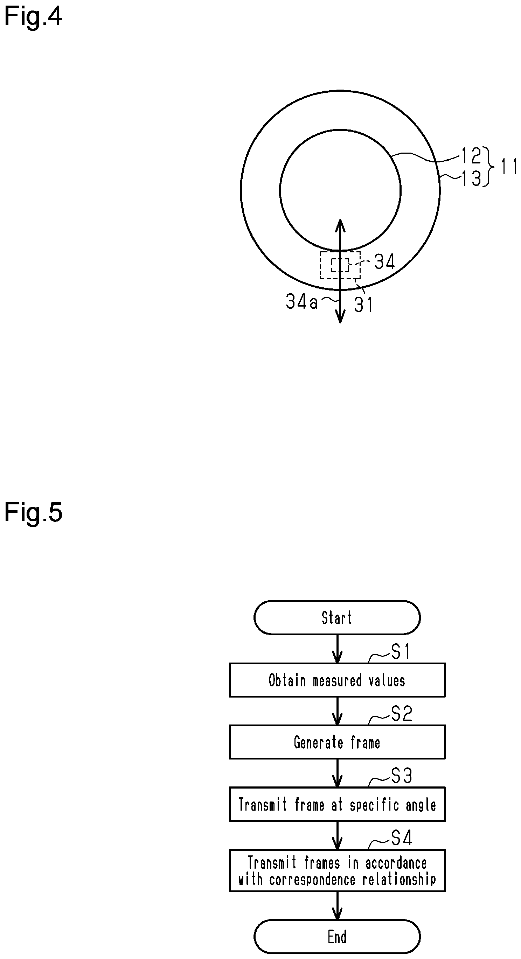

As shown in Fig. 4, the acceleration sensor 34 has a detection axis 34a. The acceleration sensor 34 detects an acceleration in a direction in which the detection axis 34a extends. The acceleration sensor 34 is attached to the wheel assembly 11 so as to detect the centrifugal acceleration generated by rotation of the wheel assembly 11. For example, the acceleration sensor 34 is attached to the wheel assembly 11 such that the detection axis 34a is directed in the vertical direction when the transmitter 31 is located at the lowest position in the wheel assembly 11. The acceleration sensor 34 may be a uniaxial acceleration sensor 34 or a multiaxial acceleration sensor 34 as long as it is capable of detecting at least a centrifugal force.

As shown in Fig. 3, the transmission controlling unit 35 includes a processor 36 and a memory 37. The transmission controlling unit 35 has a timing function. The timing function is implemented by, for example, a timer or a counter. The processor 36 may be, for example a CPU, a GPU, or a DSP. The memory 37 includes a ROM and a RAM. The memory 37 stores program codes or commands configured to cause the processor 36 to execute processes. The transmission controlling unit 35 may include a hardware circuit such as an ASIC and an FPGA. The transmission controlling unit 35, which is processing circuitry, may include one or more processors 36 that operate according to a computer program, one or more hardware circuits such as an ASIC and an FPGA, or a combination thereof. The ROM and the RAM, which are computer-readable media, include any type of media that are accessible by general-purpose computers and dedicated computers.

The memory 37 stores an ID code indicating individual identification information of each of the transmitters 31. For illustrative purposes, the ID code of the transmitter 31 attached to the left front wheel assembly FL is denoted by FLID, the ID code of the transmitter 31 attached to the right front wheel assembly FR is denoted by FRID, the ID code of the transmitter 31 attached to the left rear wheel assembly RL is denoted by RLID, and the ID code of the transmitter 31 attached to the right rear wheel assembly RR is denoted by RRID.

The transmission controlling unit 35 generates a frame. The transmission controlling unit 35 outputs the generated frame to the transmission circuit 39. The frame is digital data and is a data string of binary numbers. The frame includes data having a format specified by a protocol. The format of the frame includes, for example, a preamble, an ID code, pressure data, temperature data, a status code, and an error detection code.

The transmission circuit 39 transmits, from the transmission antenna 41, a wireless signal, which has been modulated in accordance with the frame delivered by the transmission controlling unit 35. The transmission circuit 39 transmits the frame in this manner. The wireless signal is a signal of an RF band, for example, a 315 MHz band or a 434 MHz band.

The transmitter 31 is capable of performing steady-state transmission, in which the frame is transmitted regardless of the rotation angle of the wheel assembly 11, and specific angle transmission, in which the frame is transmitted when the rotation angle of the wheel assembly 11 is a predetermined specific angle.

In the steady-state transmission, the frame is transmitted from the transmitter 31 at specified intervals. The specified intervals ar set to, for example, ten seconds to several tens of seconds.

The specific angle transmission is performed, for example, when the vehicle 10 starts to travel after the vehicle 10 has been in a stopped state for a specified time or longer. The specified time is set to a time longer than a time required to change the positions of the wheel assemblies 11, such as in tire rotations, or time required to replace the wheel assemblies 11. The specified time is set to, for example, several tens of minutes to several hours.

Whether or not the vehicle 10 is traveling can be determined based on acceleration detected by the acceleration sensor 34. The centrifugal acceleration acting on the acceleration sensor 34 increases as the vehicle speed increases. If the acceleration detected by the acceleration sensor 34 is greater than or equal to a travel determination threshold, the transmission controlling unit 35 determines that the vehicle 10 is traveling. If the acceleration detected by the acceleration sensor 34 is less than the travel determination threshold, the transmission controlling unit 35 determines that the vehicle 10 is in a stopped state. The travel determination threshold is set to a value greater than the acceleration detected by the acceleration sensor 34 when the vehicle 10 is in a stopped state, while taking factors such as tolerances into consideration.

In the specific angle transmission, the frame is transmitted when the transmission controlling unit 35 detects that the rotation angle of the wheel assembly 11 agrees with the predetermined specific angle. Specifically, the transmission controlling unit 35 transmits the frame when the specific angle is detected and a specified time (for example, ten seconds to several tens of seconds) has elapsed since the previous transmission of the frame. The specific angle may be an angle that corresponds to a state in which the transmitter 31 is located at the highest position in the wheel assembly 11, or an angle that corresponds to a state in which the transmitter 31 is located at the lowest position in the wheel assembly 11.

The control executed by the transmission controlling unit 35 when performing the specific angle transmission will now be described.

As shown in Fig. 5, the transmission controlling unit 35 obtains measured values from the pressure sensor 32 and the temperature sensor 33 in step S1.

Next, in step S2, the transmission controlling unit 35 generates a frame of a predetermined format. The frame includes information that indicates measured values obtained in step S1.

Next, in step S3, the transmission controlling unit 35 transmits the frame upon detection of the specific angle. Whether or not the transmitter 31 is located at a position corresponding to the specific angle can be detected based on the acceleration detected by the acceleration sensor 34. As described above, the direction in which the detection axis 34a extends is the same as the direction in which the centrifugal force acts regardless of the rotation angle of the wheel assembly 11. Thus, the acceleration sensor 34 detects the centrifugal acceleration regardless of the rotation angle of the wheel assembly 11. In contrast, the gravitational acceleration always acts in the vertical direction. Thus, in a case in which the detection axis 34a is not directed in the vertical direction, the acceleration sensor 34 detects a component force of the gravitational acceleration. The acceleration sensor 34 detects an acceleration obtained by adding the gravitational acceleration to the centrifugal acceleration.

Unless the vehicle 10 is abruptly accelerated or stopped, the centrifugal acceleration changes only slightly in one rotation of the wheel assembly 11. Accordingly, the acceleration that changes in one rotation of the wheel assembly 11 is deemed to be the gravitational acceleration. Thus, a state in which the rotation angle of the wheel assembly 11 agrees with the specific angle can be detected by using changes in the gravitational acceleration. When only the gravitational acceleration is considered, the gravitational acceleration changes in a range between +1 [G] and -1 [G] in one rotation of the wheel assembly 11. In a case in which the detection axis 34a is directed in the vertical direction when the transmitter 31 is at the lowest position, the gravitational acceleration is +1 [G] when the transmitter 31 is located at the lowest position of the wheel assembly 11, and the gravitational acceleration is -1 [G] when the transmitter 31 is located at the highest position of the wheel assembly 11. By using these changes, the transmission controlling unit 35 is able to transmit the frame upon detection of the specific angle. For example, when the transmission controlling unit 35 obtains acceleration from the acceleration sensor 34 at a specified interval, the gravitational acceleration switches from increasing to decreasing when the transmitter 31 passes the lowest position. In this manner, the transmission controlling unit 35 is capable of detecting that the transmitter 31 is at the specific angle based on increase and decrease of the gravitational acceleration.

The "specific angle" is the rotation angle of the wheel assembly 11 within an acceptable range. Errors can occur between the specific angle and the rotation angle of the wheel assembly 11 when the frame is actually transmitted due to various factors such as the frequency at which the transmission controlling unit 35 obtains the acceleration from the acceleration sensor 34 and detection errors of the acceleration sensor 34. The "specific angle" does not only indicate an angle exactly agreeing with a certain specific angle but also includes a permissible range with errors taken into consideration. The transmission controlling unit 35 detects the specific angle by executing step S3. The transmission controlling unit 35 corresponds to a detecting unit.

In step S4, the transmission controlling unit 35 transmits the same frame as the frame transmitted in step S3. The frame transmitted in step S4 and the frame transmitted in step S3 are the same in terms of all the data including the preamble, the ID code, the pressure data, the temperature data, the status code, and the error detection code.

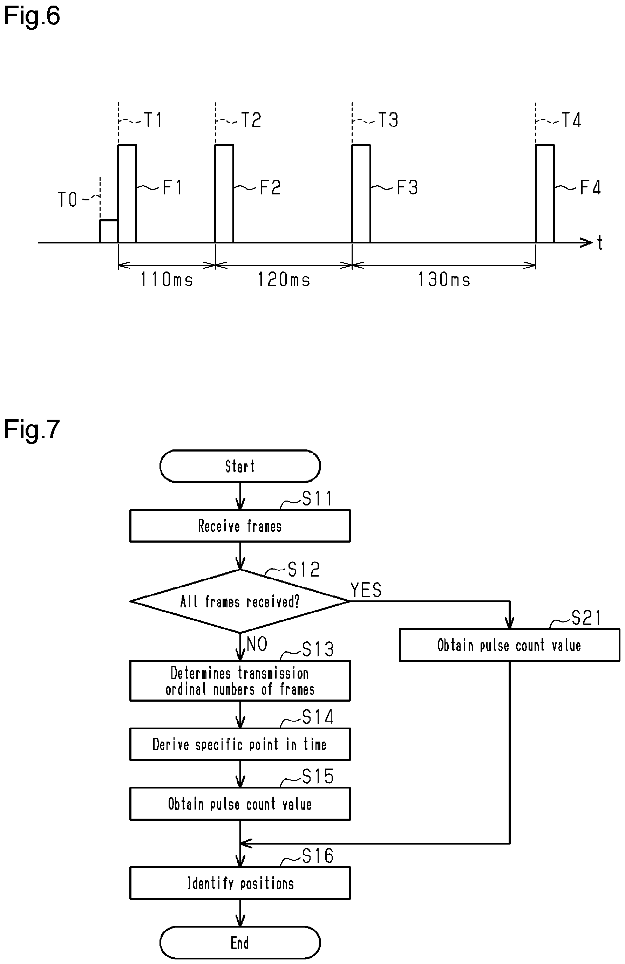

As shown in Fig. 6, the frame F1 transmitted in step S3 is referred to a first frame F1. In this case, the transmission controlling unit 35 performs transmission of a frame several times at predetermined transmission intervals from the transmission of the first frame F1. In the present embodiment, a frame is transmitted three times in step S4. Three frames F2, F3, F4 include a second frame F2, which is transmitted subsequent to the first frame F1, a third frame F3, which is transmitted subsequent to the second frame F2, and a fourth frame F4, which is transmitted subsequent to the third frame F3. The order of transmission of frames F1 to F4 and the transmission intervals of frames F1 to F4 are associated with each other in advance, and the transmission controlling unit 35 performs transmission of the frames F1 to F4 in accordance with the correspondence relationship. The correspondence relationship between the order of transmission of frames F1 to F4 and the transmission intervals of frames F1 to F4 is stored, for example, in the memory 37.

When the specific angle is detected at point in time T0, the first frame F1 is transmitted at point in time T1. The transmission interval between the first frame F1 and the second frame F2, which is transmitted subsequent to the first frame F1, is 110 [ms]. The second frame F2 is transmitted at point in time T2, when 110 [ms] has elapsed from point in time T1. The transmission interval between the second frame F2 and the third frame F3, which is transmitted subsequent to the second frame F2, is 120 [ms]. The third frame F3 is transmitted at point in time T3, when 120 [ms] has elapsed from point in time T2. The transmission interval between the third frame F3 and the fourth frame F4, which is transmitted subsequent to the third frame F3, is 130 [ms]. The fourth frame F4 is transmitted at point in time T4, when 130 [ms] has elapsed from point in time T3. The first frame F1 is the frame that is transmitted first, and the second frame F2, which is transmitted second, is associated with 110 [ms]. The third frame F3, which is transmitted third, is associated with 120 [ms]. The fourth frame F4, which is transmitted fourth, is associated with 130 [ms]. In this manner, the frames transmitted subsequent to the frame that is transmitted first are transmitted at different time intervals. Specifically, the transmission interval between arbitrarily selected two of all the frames transmitted is different from the transmission interval between any other arbitrarily selected two of the frames.

Upon transmission of the first frame F1, the transmission controlling unit 35 starts transmitting the second frame F2, the third frame F3, and the fourth frame F4 at the above-described transmission intervals. In other words, the transmission controlling unit 35 is configured to transmit the four frames F1 to F4 successively upon detection of the specific angle. The frames F1 to F4 are transmitted at different transmission intervals. The above-described transmission intervals are merely examples, and the transmission intervals of frames F1 to F4 may be set freely. The transmission controlling unit 35 corresponds to a transmitting unit.

The receiver 50 will now be described.

As shown in Fig. 1, the receiver 50 includes a reception circuit 51, a reception controlling unit 52, and a reception antenna 56. The reception controlling unit 52 is connected to a display 57 mounted on the vehicle 10. The reception controlling unit 52 includes a processor 53 and a memory 54. The reception controlling unit 52 includes a timing function. The timing function is implemented by, for example, a timer or a counter. The processor 53 may be, for example a CPU, a GPU, or a DSP. The memory 54 includes a ROM and a RAM. The memory 54 stores program codes or commands configured to cause the processor 53 to execute processes. The reception controlling unit 52 may include a hardware circuit such as an ASIC and an FPGA. The reception controlling unit 52, which is processing circuitry, may include one or more processors 53 that operate according to a computer program, one or more hardware circuits such as an ASIC and an FPGA, or a combination thereof. The ROM and the RAM, which are computer-readable media, include any type of media that are accessible by general-purpose computers and dedicated computers.

The reception circuit 51 demodulates the wireless signals received from the respective transmitters 31 through the reception antenna 56 to obtain data contained in the frames F1 to F4. The reception circuit 51 outputs data to the reception controlling unit 52. The reception circuit 51 corresponds to a receiving unit.

The reception controlling unit 52 acquires the pressures in the tires 13 and the temperatures in the tires 13, which represent the conditions of the tires 13, based on the data output from the reception circuit 51. When there is an anomaly in any of the tires 13, the reception controlling unit 52 displays a warning on the display 57.

The memory 54 stores the ID codes of the transmitters 31 attached to the four wheel assemblies 11. The transmitters 31 are thus associated with the receiver 50. The memory 54 stores the correspondence relationship between the order of transmission of frames F1 to F4 and the transmission intervals of frames F1 to F4. In other words, the transmitters 31 transmit the frames F1 to F4 at the transmission intervals stored in the memory 54 of the receiver 50.

In some cases, the receiver 50 is desired to identify the tire 13 of one of the four wheel assemblies 11 that is related to the received frames F1 to F4. For example, in some cases, the display 57 is desired to display the position of the wheel assembly 11 in which a pressure anomaly has occurred in the tire 13. In other cases, the display 57 is desired to display the pressures of the tires 13 corresponding to the respective positions of the wheel assemblies 11. In such cases, it is necessary to determine one of the four wheel assemblies 11 to which the received frames F1 to F4 are related. In other words, the reception controlling unit 52 needs to associate the ID codes of the respective transmitters 31 with the positions of the wheel assemblies 11.

A wheel assembly position identifying process for identifying which of the four wheel assemblies 11 each transmitter 31 is attached to will now be described. The wheel assembly position identifying process is executed when the vehicle 10 is activated by a start switch, which switches the state of the vehicle 10 between an activated state and a stopped state. The activated state of the vehicle 10 refers to a state in which the vehicle 10 can travel through operation of the accelerator pedal. The stopped state of the vehicle 10 refers to a state in which the vehicle 10 will not travel even if the accelerator pedal is operated.

As shown in Fig. 7, the reception controlling unit 52 receives the frames F1 to F4 in step S11. In the present embodiment, the description is made on the assumption that at least two of the four frames F1 to F4 transmitted by one of the transmitters 31 have been received.

In step S12, the reception controlling unit 52 determines whether all of the four frames F1 to F4 have been received. If the decision outcome of step S12 is positive, the reception controlling unit 52 executes step S21. If the decision outcome of step S12 is negative, the reception controlling unit 52 executes step S13.

In step S21, the reception controlling unit 52 obtains a pulse count value that corresponds to the point in time at which the first frame F1 was received. When all of the four frames F1 to F4 are received, the frame F1, which is received first among the four frames F1 to F4, is determined to be the first frame F1. The reception controlling unit 52 obtains a pulse count value that corresponds to the point in time at which the first frame F1 was received from the ABS controller 25. The ABS controller 25 stores pulse count values in the memory 29 in association with points in time. This allows the reception controlling unit 52 to obtain the pulse count value that corresponds to the point in time at which the first frame F1 was received. After step S21, the reception controlling unit 52 executes step S16.

In step S13, the reception controlling unit 52 determines the transmission ordinal numbers of the received ones of the frames F1 to F4 from the correspondence relationship between the order of transmission and the transmission intervals. Since the transmission intervals of frames F1 to F4 are different, the intervals at which the reception controlling unit 52 receives the frames F1 to F4 are deemed to be the same as the transmission intervals. If the time from transmission to reception of the respective frames F1 to F4 is the same for all the frames F1 to F4, the reception interval between the first frame F1 and the second frame F2 will be the same as the transmission interval between the first frame F1 and the second frame F2. The reception interval between the second frame F2 and the third frame F3 will be the same as the transmission interval between the second frame F2 and the third frame F3. The reception interval between the third frame F3 and the fourth frame F4 will be the same as the transmission interval between the third frame F3 and the fourth frame F4.

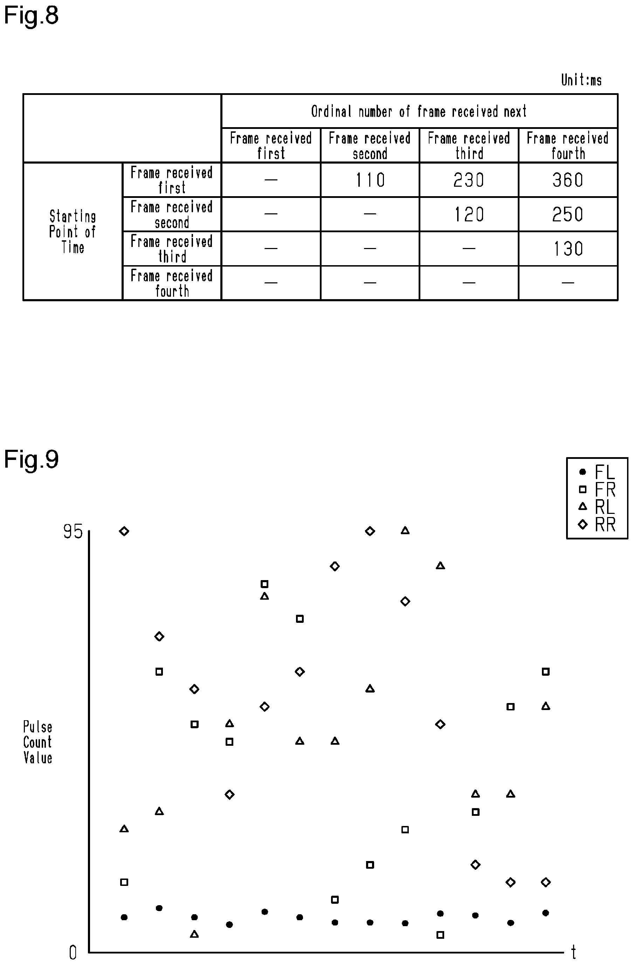

As shown in Fig. 8, the reception interval is 360 [ms] if the first frame F1 and the fourth frame F4 are received. If two frames are received and the reception interval between those two frames is 360 [ms], the reception controlling unit 52 can determine that the frame that is received first is the first frame F1 and the frame that is received last is the fourth frame F4. Likewise, if two frames are received and the reception interval between those two frames is 120 [ms], the reception controlling unit 52 can determine that the frame that is received first is the second frame F2 and the frame that is received last is the third frame F3. Similarly, in a case in which three or more frames are received, the reception controlling unit 52 can determine the transmission ordinal number of each of the received frames by using the reception interval between any two of the received frames. In this manner, if at least two of the four frames F1 to F4 are received, it is possible to determine the transmission ordinal numbers of the received frames. In other words, since the reception intervals correspond to the transmission intervals, the reception controlling unit 52 determines the transmission ordinal numbers of the received frames from the correspondence relationship between the order of transmission and the transmission intervals. The reception controlling unit 52 corresponds to a determining unit.

As shown in Fig. 7, the reception controlling unit 52 derives a specific point in time in step S14. The specific point in time is within specified time from when the transmitter 31 detects the specific angle, and is associated with the point in time at which the transmitter 31 detects the specific angle. Since the first frame F1 is transmitted upon detection of the specific angle, the specific point in time is within specified time from when the first frame F1 is transmitted. In other words, the specific point in time is associated with the point in time at which the first frame F1 is transmitted. The specific point in time in the present embodiment is the reception point in time of the first frame F1. The reception controlling unit 52 is capable of acquiring the transmission ordinal number of the received one of the frames F1 to F4. Thus, when receiving the first frame F1, the reception controlling unit 52 sets the specific point in time to the point in time at which the first frame F1 is received. When failing to receive the first frame F1, the reception controlling unit 52 estimates a point in time at which the first frame F1 would have been received, and sets the specific point in time to the estimated point in time. For example, when the second frame F2 is received, a point in time obtained by subtracting 110 [ms] from the reception point in time of the second frame F2 is a point in time at which the first frame F1 would have been received. When the third frame F3 is received, a point in time obtained by subtracting 230 [ms] from the reception point in time of the third frame F3 is a point in time at which the first frame F1 would have been received. When the fourth frame F4 is received, a point in time obtained by subtracting 360 [ms] from the reception point in time of the fourth frame F4 is a point in time at which the first frame F1 would have been received. In this manner, even if the first frame F1 cannot be received, it is possible to derive the point in time at which the first frame F1 would have been received. The specific point in time includes the point in time at which the first frame F1 is actually received and the point in time at which the first frame F1 would have been received, that is, the estimated reception point in time. In the following description, "the reception point in time of the first frame F1" includes both the actual reception point in time and the estimated reception point in time, unless otherwise specified. The reception controlling unit 52 corresponds to a specific point-in-time deriving unit.

Next, in step S15, the reception controlling unit 52 obtains a pulse count value that corresponds to the specific point in time from the ABS controller 25. Since the memory 29 of the ABS controller 25 stores pulse count values in association with points in time, the reception controlling unit 52 can obtain a pulse count value that corresponds to the specific point in time derived in step S14.

Next, in step S16, the reception controlling unit 52 executes a position identifying process to identify one of the four wheel assemblies 11 to which each of the transmitters 31 is attached. The position identifying process is executed by collecting the pulse count value obtained in step S21 and the pulse count value obtained in step S15. The pulse count value obtained in step S21 and the pulse count value obtained in step S15 are both pulse count value at the reception point in time of the first frame F1.

The rotation speeds of the wheel assemblies 11 differ, for example, due to the influence of the differential gear. Thus, the relative positional relationship of the transmitters 31, which are attached to the four wheel assemblies 11, changes as the vehicle 10 travels. That is, the rotation angle of each transmitter 31 is synchronized with the rotation angle of the wheel assembly 11 to which the transmitter 31 is attached, but is not synchronized with the rotation angles of the other wheel assemblies 11 to which that transmitters 31 is not attached. In a case in which each of the four transmitters 31 transmits the first frame F1 at the specific angle, the rotation angle of each wheel assembly 11 is synchronized with the rotation angle at which the first frame F1 is transmitted from the corresponding one of the four transmitters 31. Thus, in a case in which the transmitters 31 transmit the first frame F1 at the specific angle, if the pulse count value is obtained upon reception of the first frame F1 through each of the rotation sensor units 21 to 24, one of the rotation sensor units 21 to 24 has a small variation of the pulse count value in correspondence with each transmitter 31. It is thus possible to identify one of the four wheel assemblies 11 to which each of the transmitters 31 is attached based on the variation of the pulse count value obtained at the reception point in time of the first frame F1.

It is now assumed that, as shown in Fig. 9, the transmitter 31 attached to the left front wheel assembly FL has transmitted the first frame F1, and the pulse count value is obtained at the reception point in time of that first frame F1.

In the example shown in Fig. 9, the variation of the pulse count value detected by the first rotation sensor unit 21, which corresponds to the left front wheel assembly FL, is the smallest. Therefore, the transmitter 31 of FLID is identified to be attached to the left front wheel assembly FL. Likewise, the reception controlling unit 52 identifies the wheel assemblies 11 to which the transmitters 31 of FFID, RLID, and RRID are attached. The wheel assembly position identifying process is repeated each time any of the frames F1 to F4 is received until the correspondence relationship between all the transmitters 31 and the wheel assemblies 11 are identified. When the four ID codes are associated with the positions of the wheel assemblies 11, the reception controlling unit 52 ends the wheel assembly position identifying process. The correspondence relationship between the four ID codes and the positions of the wheel assemblies 11 is stored in the memory 54 of the reception controlling unit 52. The reception controlling unit 52 corresponds to an identifying unit.

The present embodiment has the following advantages.
(1) The reception controlling unit 52 identifies one of the wheel assemblies 11 to which each transmitter 31 is attached based on the pulse count value that is obtained at the specific point in time. The specific point in time is derived from the order of transmission of frames F1 to F4. In the present embodiment, the reception point in time of the first frame F1 is the specific point in time. All the frames F1 to F4 have different transmission intervals. Specifically, the transmission interval between arbitrarily selected two of all the frames F1 to F4 is different from the transmission interval between any other arbitrarily selected two of the frames F1 to F4. This configuration allows the reception controlling unit 52 to derive the order of transmission of frames F1 to F4 from the correspondence relationship between the order of transmission of frames F1 to F4 and the transmission intervals of frames F1 to F4. If two or more of the three or more frames F1 to F4, which are transmitted successively, are received, the order of transmission of frames F1 to F4 can be determined. Even if at least one of the three or more frames F1 to F4, which are transmitted successively, fails to be received, the pulse count value at the specific point in time can be obtained. In the present embodiment, if two of the four frames F1 to F4, which are transmitted successively, are received, the pulse count value at the specific angle can be obtained. This prevents time required to identify the positions of the transmitters 31 from being extended as compared to a receiver 50 that cannot obtain the pulse count value if the frame that is transmitted first is not received.
(2) The specific point in time is set to the reception point in time of the first frame F1. The first frame F1 is transmitted when the rotation angle of each wheel assembly 11 agrees with the specific angle. Thus, since the specific point in time is set to the reception point in time of the first frame F1, variation of the pulse count value is reduced as compared to a case in which the reception point in time is set to a point in time different from the reception point in time of the first frame F1. This shortens the time required to identify the positions of the transmitters 31.
(3) Each transmitter 31 transmits the frames F1 to F4 at the transmission intervals stored in the memory 54 of the receiver 50. The receiver 50 identifies the positions of the transmitters 31 using the correspondence relationship between the order of transmission and the transmission intervals of frames F1 to F4. Each transmitter 31 transmits the frames F1 to F4 at the transmission intervals stored in the memory 54 of the receiver 50, so as to allow the receiver 50 to identify one of the wheel assemblies 11 to which that transmitter 31 is attached. If two or more of the three or more frames F1 to F4, which are transmitted successively, are received, the receiver 50 can identify the positions of the transmitters 31. This prevents the time required to determine the positions of the transmitters 31 from being extended.
(4) The frames F1 to F4, which are transmitted multiple times upon detection of the specific angle, are the same data. Since the frames F1 to F4 are transmitted at different transmission intervals, the receiver 50 is capable of identifying the order of transmission even though the frames F1 to F4 are all the same data. Even in a case in which frames each contain data indicating the order of transmission or data indicating time elapsed from the detection of the specific angle, the order of transmission of the frames can be identified. In this case, however, the data length of each frame may be extended. Also, a type of frame format must be used that can contain data indicating the order of transmission or data indicating time elapsed from the detection of the specific angle.
   In contrast, in a case in which the frames F1 to F4 are transmitted at different transmission intervals so as to allow the receiver 50 to identify the order of transmission, it is not necessary to transmit frames that contain data indicating the order of transmission or data indicating time elapsed from the detection of the specific angle. This restricts the data lengths of the frames F1 to F4 from being extended, and thus extends the life of the battery 40. Also, it is not necessary to use a type of frame format that can contain data indicating the order of transmission or data indicating time elapsed from the detection of the specific angle.
(5) The frames F1 to F4 are transmitted at different transmission intervals. Thus, the positions of the transmitters 31 at which the frames F1 to F4 are transmitted tend to be different from one another. Depending on the vehicle 10, there exists a null point, at which the frames F1 to F4 transmitted from the transmitters 31 interfere with each other. If the frames F1 to F4 are transmitted at the same position and that position agrees with the null point, the receiver 50 may receive none of the frames F1 to F4. However, since the positions of the transmitters 31 at which the frames F1 to F4 are transmitted are different from one another, the frames F1 to F4 are prevented from failing to be received due to the null point.
(6) The transmission-reception system 30 includes the transmitters 31 and the receiver 50, which are described above. This restricts the time required to identify the positions of the transmitters 31 from being extended.

The above-described embodiment may be modified as follows. The above-described embodiment and the following modifications can be combined as long as the combined modifications remain technically consistent with each other.

The specific point in time may be different from the reception point in time of the first frame F1 as long as the specific point in time is within the specific time from the detection of the specific angle. The reception point in time of the first frame F1 is influenced by length of time before the reception, but is only slightly displaced from the point in time at which the specific angle is detected. In a case in which the specific point in time is set to a point in time that is different from the reception point in time of the first frame F1, the influence of the speed of the vehicle 10 increases as the difference between the specific point in time and the reception point in time of the first frame F1 increases. A case of the fourth frame F4 will be described as an example. The transmission point in time of the fourth frame F4 is later than the transmission point in time of the first frame F1 by 360 [ms]. Accordingly, the fourth frame F4 is transmitted at an angle that is displaced from the specific angle by the amount corresponding to the angle that the wheel assembly 11 rotates in 360 [ms]. The angle that the wheel assembly 11 rotates in 360 [ms] varies depending on the speed of the vehicle 10. Thus, if the specific angle is set in correspondence with the reception point in time of the fourth frame F4, variation of the pulse count value may be significant due to the influence of the speed of the vehicle 10. It is thus preferable to set the specific point in time to a point in time at which the difference between the first frame F1 and the reception point in time is small. Therefore, the specified time refers to time within a range in which position identification can be performed based on variation of the pulse count value. The specific point in time is not limited to the reception point in time of the frames F1 to F4. For example, the specific point in time may be a point in time between the first frame F1 and the second frame F2 or a point in time prior to the reception point in time of the first frame F1.

Even if the reception controlling unit 52 receives all the frames F1 to F4, the reception controlling unit 52 may derive the specific point in time based on the correspondence relationship between the order of transmission of frames F1 to F4 and the transmission intervals of frames F1 to F4. That is, step S12 and step S21 may be omitted from the flowchart of Fig. 7.

The frames F1 to F4, which are transmitted multiple times upon detection of the specific angle, may be data strings different from each other. For example, if the frames F1 to F4 include the order of transmission, time elapsed from the detection of the specific angle, and the like, the values of the data will vary depending on the order of transmission. Even in this case, if the frames F1 to F4 are transmitted at different transmission intervals, the reception controlling unit 52 can identify the order of transmission from the transmission intervals.

The transmitter 31 may be configured to detect as the condition of the tire 13 either the pressure of the tire 13 or the temperature of the tire 13.

The angle detection value may be a value obtained by converting pulse count value into a rotation angle [°].

As long as the vehicle 10 includes multiple wheel assemblies 11, the vehicle 10 may be a motorcycle, for example.

### REFERENCE SIGNS LIST

F1 to F4...Frames; 10...Vehicle; 11...wheel assemblies; 13...Tires; 21, 22, 23, 24... Rotation Sensor Units as Rotation Angle Detecting Units; 30... Transmission-Reception System; 31...Transmitters; 35...Transmission Controlling Unit as Detecting Unit and Transmitting Unit; 50... Receiver; 51... Reception Circuit as Receiving Unit; 52... Reception Controlling Unit as Determining Unit, Specific Point-In-Time Deriving Unit, and Identifying Unit; 54... Memory

## Claims

1. A receiver, comprising:
a receiving unit configured to receive frames transmitted by transmitters respectively attached to wheel assemblies, each transmitter transmitting three or more frames successively at different transmission intervals when the transmitter detects that a rotation angle of the associated wheel assembly agrees with a specific angle;
a memory configured to store a correspondence relationship between an order of transmission of the frames and the transmission intervals;
a determining unit configured to determine transmission ordinal numbers of the frames from the correspondence relationship when the receiving unit receives the frames;
a specific point-in-time deriving unit configured to derive, from the order of transmission of the frames determined by the determining unit, a specific point in time that is within a specified time from the detection of the specific angle; and
an identifying unit configured to identify one of the wheel assemblies to which each of the transmitters is attached based on an angle detection value that is obtained at the specific point in time from a rotation angle detecting unit, the rotation angle detecting unit detecting a rotation angle of the wheel assembly as the angle detection value.

2. The receiver according to claim 1, wherein the specific point-in-time deriving unit is configured to derive, as the specific point in time, a reception point in time or an estimated reception point in time of the frame that has been transmitted first.

3. The receiver according to claim 2, wherein the specific point-in-time deriving unit is configured to, when the frame that has been transmitted first is not received, derive the estimated reception point in time of the frame that has been transmitted first by subtracting, from a reception point in time of the frame that has been transmitted at an nth transmission (n being an integer greater than 1), the transmission interval between the frame that has been transmitted first and the frame that has been transmitted at the nth transmission.

4. A transmitter that is attached to each of wheel assemblies, the transmitter comprising:
a detecting unit configured to detect that a rotation angle of the wheel assembly agrees with a specific angle; and
a transmitting unit configured to transmit three or more frames successively at different transmission intervals when the detecting unit detects that the rotation angle of the wheel assembly agrees with the specific angle, wherein
the transmitting unit is configured to transmit the frames at the transmission intervals stored in a memory of a receiver, so as to allow the receiver to identify one of the wheel assemblies to which the transmitter is attached, and
the frames are all the same data.

5. A transmission-reception system, comprising:
a transmitter that is attached to each of wheel assemblies; and
a receiver, wherein
the transmitter includes:
a detecting unit configured to detect that a rotation angle of the wheel assembly agrees with a specific angle; and
a transmitting unit configured to transmit three or more frames successively at different transmission intervals when the detecting unit detects that the rotation angle of the wheel assembly agrees with the specific angle,
the frames are all the same data,
the receiver includes:
a receiving unit configured to receive the frames;
a memory configured to store a correspondence relationship between an order of transmission of the frames and the transmission intervals;
a determining unit configured to determine transmission ordinal numbers of the frames from the correspondence relationship when the receiving unit receives the frames;
a specific point-in-time deriving unit configured to derive, from the order of transmission of the frames determined by the determining unit, a specific point in time that is within a specified time from the detection of the specific angle; and
an identifying unit configured to identify one of the wheel assemblies to which each of the transmitters is attached based on an angle detection value that is obtained at the specific point in time from a rotation angle detecting unit, the rotation angle detecting unit detecting a rotation angle of the wheel assembly as the angle detection value.
